# NEUE EUROPÄISCHE PATENTSCHRIFT

(11) **EP 1 182 089 B2**
(45) Veröffentlichungstag und Bekanntmachung des Hinweises auf die Entscheidung über den Einspruch: **27.02.2008**
(45) Hinweis auf die Patenterteilung: 16.03.2005
(21) Anmeldenummer: 01119211.9
(22) Anmeldetag: 09.08.2001
(51) Int. Cl.: B60R 16/02

(54) **Verfahren zur Warnung eines Fahrers eines Fahrzeugs**
Vehicle driver warning procedure
Procédé pour avertir un conducteur d'un véhicule

(30) Priorität: 16.08.2000 DE 10039795
(43) Veröffentlichungstag der Anmeldung: 27.02.2002
(60) Teilanmeldung: 05101988.3
(73) Patentinhaber: ROBERT BOSCH GMBH, 70442 Stuttgart (DE)
(72) Erfinder: Knoll, Peter, 76275 Ettlingen (DE)

(56) Entgegenhaltungen:
- DE-A- 3 108 874
- DE-A- 4 338 244
- DE-A- 19 723 922
- US-A- 5 519 410
- US-A- 5 801 667
- Wierwille, Walter W.; Tijerina, L.: "Eine Analyse von Unfallberichten als ein Mittel zur Bestimmung von Problemen, die durch die Verteilung der visuellen Aufmerksamkeit und der visuellen Belastung innerhalb des Fahrzeugs verursacht werden", Z. für Verkehrssicherheit 41(1995)Nr.4,S.164-168.
- Wierwille, Walter W.; Tijerina, L.: "Darstellung des Zusammenhangs zwischen der visuellen Beanspruchung des Fahrers im Fahrzeug und dem Eintreten eines Unfalls", Z. für Verkehrssicherheit 43(1997)Nr.2,S.67-74.

## Beschreibung

### Stand der Technik

Die Erfindung geht aus von einem Verfahren zur Warnung eines Fahrzeugführers nach der Gattung des Hauptanspruchs. Es ist bekannt, einen Fahrer durch Warnanzeigen, die vorzugsweise in einem Kombiinstrument vor dem Fahrer angeordnet sind, vor Fehlfunktionen eines Fahrzeugs oder vor sonstigen, gefährlichen kritischen Situationen zu warnen. Hierzu ist bekannt, für die Warnanzeigen mittels Sensoren Fahrzeugfunktionen auszuwerten, z.B. die Dicke der Bremsbeläge, die Kühlwassertemperatur, den Öldruck oder die Außentemperatur. Weiterhin sind Sensoren bekannt, die Hindernisse im Fahrweg vor oder hinter dem Fahrzeug erkennen, so z.B. eine Einparkhilfe oder ein ACC-System (Adaptiv Cruise Control), die mittels elektromagnetischen oder akustischen Sensoren Abstände zu Hindernissen erfassen. Weiterhin sind Verfahren bekannt, bei denen mittels einer Kamera der Fahrweg und die Umgebung des Fahrzeugs überwacht werden, um z.B. ein Verlassen des Fahrwegs durch das Fahrzeug zu detektieren. Ferner sind Systeme bekannt, mit denen ein Fahrer dahingehend überwacht wird, ob er ermüdet oder einschläft. Nachteilig bei diesen Warnvorrichtungen ist, dass ein Fahrer einerseits vor gefährlichen Situationen mehrfach gewarnt wird und andererseits auch bei möglichen Gefahrensituationen gewarnt wird, die der Fahrer längst erkannt hat oder die keine Gefahrensituation für das Fahrzeug darstellen. Liegt z.B. ein Stück Papier oder ein Stück Holz auf der Fahrbahn und weicht der Fahrer kurz über eine Begrenzung der Fahrbahnmarkierung aus, wird er einerseits möglicherweise vor dem Hindernis und andererseits bei dem Überfahren der Fahrbahnbegrenzungsmarkierung gewarnt, obwohl er das Hindernis einerseits gesehen hat sowie die Fahrbahnmarkierung willentlich überfahren hat und andererseits auch durch ein Überfahren des Papiers oder Holzstücks kein Schaden an dem Fahrzeug entstanden wäre. Folglich kann ein Fahrer mit unnötigen Warnungen überhäuft werden, die seine Reizschwelle gegenüber Warnungen durch die Fahrzeugelektronik insgesamt absenken. Eine möglicherweise wichtige Warnung nimmt ein Fahrer dann gegebenenfalls nicht mehr wahr, sodass er trotz eines geeigneten Warnsystems in einer wirklichen Gefahrensituation nicht mehr auf eine Warnung reagiert.

Aus der US 5,801,667 ist eine Anzeige in einem Fahrzeug bekannt, die dazu dient, Fahrinformationen einem Fahrer möglichst schnell zugänglich zu machen. Über eine Kamera wird die Blickrichtung des Fahrers ermittelt. Die Anzeige wird daraufhin derart betrieben, dass die Wahrnehmung durch den Benutzer gewährleistet ist. Insbesondere erfolgt hierzu eine Anzeige in Blickrichtung des Fahrers. Eine Löschung erfolgt erst dann, wenn sichergestellt ist, dass die Anzeige vom Fahrer wahrgenommen werden konnte.

Aus der DE 197 23 922 A1 ist eine Signalanzeigevorrichtung sowie ein Verfahren zum Anzeigen eines Systemzustandes in einem Fahrzeug bekannt. Der Fahrer wird zeitweise von der Präsentation neuer Informationen während Fahrsituationen entlastet, in denen seine Konzentration für andere vorübergehende Aufgaben notwendig ist. Anhand von Signalen von Gebern wird ermittelt, ob eine anstrengende Fahrsituation vorliegt.

Die DE-A-4338244 offenbart ein gattungsbildendes Verfahren.

### Vorteile der Erfindung

Das erfindungsgemäße Verfahren mit den Merkmalen des Hauptanspruchs hat demgegenüber den Vorteil, dass vor der Ausgabe einer Warnung eine Aufmerksamkeit des Fahrzeugführers ermittelt wird und dass eine Warnung vor einer kritischen Situation in Abhängigkeit von der Aufmerksamkeit ausgegeben wird. Hierdurch wird ein Fahrer nur vor solchen Gefahren gewarnt, die seiner Aufmerksamkeit wahrscheinlich entgehen, sodass die Anzahl überflüssiger Warnungen reduziert wird. Eingehende Warnungen werden daher von dem Fahrer beachtet, sodass eine effiziente Ausgabe von Warnungen mit einer hohen Akzeptanz durch den Fahrer erreicht wird. Indem Warnungen insbesondere oder sogar nur bei einer niedrigen Aufmerksamkeit des Fahrers ausgegeben werden, wird ein Fahrer die ausgegebenen Warnungen vielmehr besonders beachten. Die Kameravorrichtung erfaßt ein Bild eines Fahrers und mittels einer Verarbeitung ist durch eine Recheneinheit auf die Aufmerksamkeit des Fahrers zu schließen, da hierdurch im Gegensatz zu indirekten Methoden, direkt die Aufmerksamkeit und insbesondere der Wachzustand des Fahrers ermittelt wird. Hierbei ist besonders vorteilhaft, die Blickrichtung, die Lidschlagsfrequenz und/oder die Kopfposition des Fahrers zu ermitteln. Eine hohe Lidschlagsfrequenz bzw. geschlossene Augenlider lassen ebenso wie ein gesenkter Kopf auf eine Ermüdung des Fahrers schließen. Vorteilhaft ist dabei, die Blickrichtung dahingehend auszuwerten, dass lediglich der Richtung, in die der Fahrer schaut, eine hohe Aufmerksamkeit zugewiesen wird, während den übrigen Richtungen, in die er nicht schaut und die also außerhalb seines Blickfelds liegen, eine niedrige Aufmerksamkeit zugewiesen wird. Schaut folglich beim Rückwärtsfahren ein Fahrer nach vorne und wird z.B. von einer Abstandsmessungsvorrichtung ein zu niedriger, rückwärtiger Abstand des Fahrzeugs zu einem Hindernis erfasst, so erfolgt neben einer optischen Warnung z.B. mittels einer Leuchtdiodenanzeige sehr früh eine zusätzliche akustische Warnung, z.B. bereits bei einem Abstand von 2 m. Bei einem Fahrer, dessen Blick im Fahrzeug nach hinten gerichtet ist, erfolgt erst bei einem rückwärtigen Abstand von vorzugsweise 50 cm eine zusätzliche, akustische Warnung.

Bei mehreren gleichzeitig auszugebenden Warnungen wird erfindungsgemäß, die Warnung vor einer kritischen Situation, die im Blickfeld des Fahrers liegt, erst nach einer Warnung vor einer kritischen Situation ausgegeben, die außerhalb des Blickfelds des Fahrers liegt.

Denn eine kritische Situation in seinem Blickfeld hat der Fahrer wahrscheinlich bereits ohne eine ausgegebene Warnung erfasst.

Weiterhin ist vorteilhaft, die Aufmerksamkeit eines Fahrers von der Bedienung im Fahrzeug angeordneter Geräte abhängig zu machen. Wird z.B. festgestellt, dass ein Fahrer eine Navigationsvorrichtung programmiert oder eine Autoradioeinheit bedient, so wird ihm für diesen Zeitraum eine niedrigere Aufmerksamkeit zugewiesen. Gleiches gilt für den Fall, dass das im Fahrzeug angeordnete Telefon benutzt wird.

Weiterhin ist vorteilhaft, über Sensoren einen Müdigkeitszustand des Fahrers zu ermitteln, indem vorzugsweise die Körpertemperatur und/oder Pulsfrequenz bestimmt wird. Auch über diese ermittelten, physiologischen Daten ist eine direkte Auskunft über die Aufmerksamkeit des Fahrers möglich.

Weiterhin ist vorteilhaft, Warnungen eine Priorität zuzuweisen, sodass Warnungen mit hoher Priorität unabhängig von der Aufmerksamkeit des Fahrers ausgegeben werden. So kann der Fahrer z.B. auf einen Defekt in der Bremsanlage oder einen von Abstandsmessvorrichtungen ermittelten Abstand zu Hindernissen von weniger als 50 cm auch bei einer hohen Aufmerksamkeit des Fahrers hingewiesen werden.

Um gerade einen Fahrer mit niedriger Aufmerksamkeit erreichen zu können, wird eine Warnung dabei in vorteilhafter Weise akustisch ausgegeben, da so die Blickrichtung des Fahrers nicht auf eine Warnanzeige gerichtet sein muss.

### Zeichnung

Ausführungsbeispiele der Erfindung sind in der Zeichnung dargestellt und in der nachfolgenden Beschreibung näher erläutert. Es zeigen Figur 1 die Anordnung von Sensoren zur Durchführung des erfindungsgemäßen Verfahrens in einem Fahrzeug, Figur 2 eine Schaltung erfindungsgemäßer Sensoren an eine Recheneinheit mit einer Ausgabeeinheit zur Durchführung des erfindungsgemäßen Verfahrens, Figur 3 ein Ausführungsbeispiel für einen Ablauf des erfindungsgemäßen Verfahrens und Figur 4 ein Ausführungsbeispiel für einen Auswerteschritt des erfindungsgemäßen Verfahrens.

### Beschreibung des Ausführungsbeispiels

Das erfindungsgemäße Verfahren kann in einer Vielzahl von Fahrzeugen eingesetzt werden, so z.B. in Schienenfahrzeugen, in Flugzeugen, in Schiffen und in Kraftfahrzeugen. Ferner ist auch eine Verwendung bei einer Fernbedienung von Fahrzeugen oder anderen Maschinen von einem Kommandostand aus möglich. Im Folgenden wird das erfindungsgemäße Verfahren anhand der Ausführung in einem Kraftfahrzeug erläutert. Eine Kombination von Sensoren, die zu einer Erfassung von kritischen Situationen für das Fahrzeug dienen, kann hierbei beliebig gewählt werden. In dem angeführten Ausführungsbeispiel wurde eine vorteilhafte Kombination von Sensoren ausgewählt, bei der jedoch je nach Ausführung des Fahrzeugs weitere Sensoren ergänzt oder auch aus Kostengründen Sensoren weggelassen werden können.

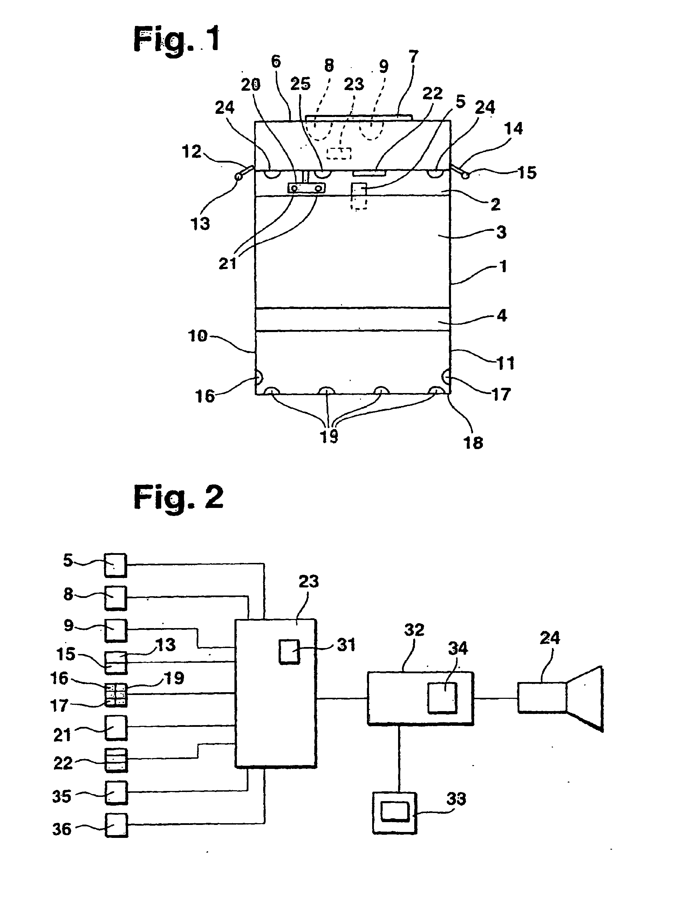

In der Figur 1 ist ein Personenkraftfahrzeug 1 mit einer Windschutzscheibe 2, einem Fahrzeugdach 3 und einer Rückscheibe 4 in einer Aufsicht auf das Fahrzeug dargestellt. In dem Fahrzeugdach 3 ist eine Kameravorrichtung 5 angeordnet; die unterhalb des Fahrzeugdachs 3 durch das Fahrzeugdach 3 verdeckt und daher gestrichelt in der Figur 1 eingezeichnet ist. An einer Vorderseite 6 des Fahrzeugs ist hinter einer Kühlerabdeckung 7 eine Radarvorrichtung 8 und eine Kameravorrichtung 9 angeordnet. An einer linken Seitenfläche 10 des Fahrzeugs ist ein linker Außenspiegel 12 mit einer ersten Außenspiegelkamera 13 angeordnet. An einer rechten Seitenfläche 11 ist ein rechter Außenspiegel 14 mit einer zweiten Außenspiegelkamera 15 angeordnet. Ferner ist an der linken Seitenfläche 10 ein Abstandssensor 16 und an der rechten Seitenfläche 11 ein Abstandssensor 17 angeordnet. In einer Rückseite 18 des Fahrzeugs sind rückwärtige Abstandssensoren 19 angeordnet. Unterhalb der Windschutzscheibe 2 ist vor einem Fahrer ein Lenkrad 20 mit physiologischen Sensoren 21 angeordnet, die sich in einem Griffbereich des Lenkrads 20 befinden. Zwischen einem Fahrer und einem Beifahrer sind in einem mittleren Bereich des Fahrzeugs elektrische Geräte 22 angeordnet. Im Bereich des Dashboards ist gestrichelt eine Recheneinheit 23 eingezeichnet, die der Auswertung der in dem Personenkraftfahrzeug 1 angeordneten Sensoren dient. Eine Verbindung von der Recheneinheit 23 zu den einzelnen Sensoren ist in der Figur 1 nicht dargestellt. Eine Ausgabe von Warnungen erfolgt über Lautsprecher 24, vorzugsweise über Lautsprecher eines Autoradios, und/oder über eine Anzeige 25, die vorzugsweise in einem Kombiinstrument vor dem Fahrer angeordnet ist.

Die physiologischen Sensoren 21 werden während des Steuerns des Personenkraftfahrzeugs 1 bei einer Berührung des Lenkrads 20 von einem Fahrer berührt, wobei eine Pulsfrequenz vorzugsweise über eine kapazitive Messung und die Körpertemperatur vorzugsweise über eine Infrarotmessung bestimmt wird. Diese Daten werden anschließend an die Recheneinheit 23 weitergeleitet, in der eine Speichereinheit mit Grenzwerten angeordnet ist. Die Recheneinheit 23 vergleicht die Daten der physiologischen Sensoren mit den gespeicherten Grenzwerten und legt in Abhängigkeit von dem Vergleich fest, ob der Fahrer wach oder schläfrig ist. Ist der Fahrer schläfrig, so wird ihm eine niedrigere Aufmerksamkeit zugewiesen. Andernfalls wird anhand dieses Kriteriums keine niedrige Aufmerksamkeit des Fahrers festgestellt. Weiterhin wird ein Bild des Fahrers von der Kameravorrichtung 5 aufgenommen und an die Recheneinheit 23 weitergeleitet. Wird nun vorzugsweise durch den Vergleich mehrerer Bilder festgestellt, dass der Fahrer entweder seine Augen geschlossen hat, die Lidschlagsfrequenz sehr hoch ist oder dass der Kopf des Fahrers gesenkt ist, so wird eine Aufmerksamkeit des Fahrers als niedrig ermittelt. Weiterhin wird aus der Kopfposition des Fahrers eine Blickrichtung des Fahrers ermittelt. Für alle anderen Richtungen außer der Blickrichtung des Fahrers, die das von dem Fahrer wahrnehmbare Blickfeld zumindest nahezu vollständig einschließt, wird dabei die Aufmerksamkeit des Fahrers als eine niedrige Aufmerksamkeit festgelegt. Für die Blickrichtung des Fahrers kann eine Aufmerksamkeit festgelegt werden, sofern nicht z.B. eine zuvor festgestellte Ermüdung des Fahrers dem entgegensteht. In einem bevorzugten Ausführungsbeispiel wird die Aufmerksamkeit des Fahrers digital zwischen "hoher Aufmerksamkeit" und "niedrigerer Aufmerksamkeit" festgelegt. Weiterhin ist auch möglich, die Größe der Aufmerksamkeit weiter zu unterteilen oder auf einer kontinuierlichen Skala festzulegen. Die Aufmerksamkeit des Fahrers wird zunächst für den Fahrer insgesamt und außerdem für verschiedene mögliche Blickrichtungen des Fahrers jeweils einzeln festgelegt. Wird z.B. über die physiologischen Sensoren 21 oder mittels Bildauswertung durch die Kameravorrichtung festgestellt, dass der Fahrer schläft, so kann die Aufmerksamkeit für keine der Blickrichtungen hoch sein. Wird dagegen festgestellt, dass der Fahrer nicht schläft, so kann die Aufmerksamkeit für maximal eine Blickrichtung des Fahrers hoch sein. Blickrichtungen können in einem bevorzugten Ausführungsbeispiel als die Blickrichtungen "nach vorne" in Richtung der Vorderseite 6, "nach links" in Richtung der linken Seitenfläche 10, "nach rechts" in Richtung der rechten Seitenfläche 11 und "nach hinten" in Richtung der Rückseite 18 des Fahrzeugs festgelegt sein. Weiterhin wird eine Bedienung der elektrischen Geräte 22 erfasst. In einem bevorzugten Ausführungsbeispiel sind die elektrischen Geräte 22 als eine Autoradiovorrichtung, eine Navigationsvorrichtung und eine Mobiltelefoneinheit ausgeführt. Sobald die Mobiltelefoneinheit betätigt wird, wird die Aufmerksamkeit des Fahrers auf einen niedrigen Wert festgelegt. Werden an der Autoradiovorrichtung und an der Navigationsvorrichtung in einem bevorzugten Ausführungsbeispiel in einem Zeitraum von 20 Sekunden mehr als zwei Betätigungen von Bedienelementen erfasst, also eine Bedienfrequenz größer 0,1 Hz, so wird ebenfalls eine niedrige Aufmerksamkeit des Fahrers festgelegt.

Weitere Sensoren, die Fahrzeugfunktionen wie den Öldruck, die Kühlwassertemperatur oder den Bremskreislauf überwachen sind in der Figur 1 nicht eingezeichnet. Derartige Fahrzeugfehlfunktionen treten im Regelfall sehr selten auf und sind auch im Falle eines aufmerksamen Fahrers für diesen wichtig, da im allgemeinen eine Anzeige lediglich über kleine Warnleuchten in der Anzeige 25 erfolgt. Eine zusätzliche, akustische Warnung wird daher unabhängig von der Aufmerksamkeit des Fahrers über die Lautsprecher 24 ausgegeben. Die Lautsprecher 24 sind dabei in einem bevorzugten Ausführungsbeispiel als Lautsprecher der Autoradiovorrichtung ausgeführt, die ein Teil der elektrischen Geräte 22 ist.

Über die Kameravorrichtung 9 wird der Fahrweg des Fahrzeugs beobachtet. Ein Bild des Fahrwegs wird an die Recheneinheit 23 übermittelt, die feststellt, ob sich das Personenkraftfahrzeug 1 noch auf dem Fahrweg befindet, in dem eine Position von Fahrbahnbegrenzungen und die Position des Personenkraftfahrzeugs 1 zu den Fahrbahnbegrenzungen bestimmt wird. Wird festgestellt, dass der Fahrer aufmerksam ist, so wird lediglich bei einer längeren Überschreitung der Fahrbahnbegrenzungen eine akustische Warnung an den Fahrer ausgegeben. Wird dagegen von der Recheneinheit 23 festgestellt, dass der Fahrer nur kurzzeitig die Fahrbahnbegrenzungen überschreitet, so wird eine Warnung unterdrückt. Die Kameravorrichtung 9 ist neben der Radarvorrichtung 8 hinter der Kühlerabdeckung 7 angeordnet, so dass weder die Kameravorrichtung 9, noch die Radarvorrichtung 8 für einen Betrachter außerhalb des Fahrzeugs sichtbar sind. Die Radarvorrichtung 8 überwacht den Abstand zu einem vorhergehenden Fahrzeug bzw. zu einem vor dem Fahrzeug liegenden Hindernis. Bei einem aufmerksamen Fahrer unterbleibt eine Warnung bis zu einem Abstand von 75 % des sogenannten "Halben Tachoabstandes", bei dem aus der gefahrenen Geschwindigkeit in Kilometern durch Division durch 2 ein vorzugsweise einzuhaltender Abstand ermittelt wird. Bei 100 km/h sind dies z.B. 50 m. Wird von der Recheneinheit 23 festgestellt, dass der Fahrer aufmerksam ist, erfolgt eine Warnung erst bei einem Unterschreiten eines Abstandes von 38 m, sofern nicht durch die Recheneinheit 23 der Abstand automatisch durch ein Einwirken auf den Antriebsstrang bzw. auf die Bremsen gesteuert wird. Wird dagegen eine geringere Aufmerksamkeit des Fahrers festgestellt, so wird bereits bei einem Unterschreiten eines Abstands von 50 m der Fahrer gewarnt. Unter anderem wird eine verringerte Aufmerksamkeit festgestellt, wenn der Fahrer nicht in Richtung der Vorderseite 6 des Fahrzeugs schaut. Die erste Außenspiegelkamera und die zweite Außenspiegelkamera 15 dienen der Überwachung eines sogenannten toten Winkels des Fahrzeugs, also einem Bereich, der nicht in den Außenspiegeln 12 bzw. 14 des Fahrzeugs für einen Fahrer ersichtlich ist. Wird z.B. durch eine Betätigung eines in Figur 1 nicht dargestellten Blinkerhebels festgestellt, dass ein Fahrer die Fahrbahn wechseln will, und wird von den Außenspiegelkameras 13, 15 ein Fahrzeug in dem jeweiligen, toten Winkel ermittelt, so erfolgt bei einer niedrigen Aufmerksamkeit des Fahrers eine Warnung, insbesondere wenn der Fahrer nicht in Richtung der linken Seitenfläche 10 bzw. der rechten Seitenfläche 11 des Fahrzeugs schaut.

Parkt ein Fahrer rückwärts ein, so wird von den Abstandssensoren 16, 17, 19 ein Abstand zu möglichen Hindernissen gemessen. Die Abstandssensoren 16, 17, 19 sind vorzugsweise als Ultraschallsensoren ausgeführt, können aber ferner auch als elektromagnetische Sensoren, z.B. Mikrowellensensoren, ausgeführt sein. Wird eine hohe Aufmerksamkeit des Fahrers in Richtung der Rückseite 18 mittels Auswertung seiner Blickrichtung festgestellt, so erfolgt eine Warnung vorzugsweise erst bei einem von den Abstandssensoren 16, 17, 19 zu einem Hindernis ermittelten Abstand von 50 cm oder weniger. Wird dagegen eine niedrige Aufmerksamkeit festgestellt oder wird festgestellt, dass der Fahrer nach vorne sieht, so wird eine Warnung an den Fahrer bei einem bevorzugten Ausführungsbeispiel bereits bei einer Unterschreitung von einem Abstand von beispielsweise 2 m zu einem von den Abstandssensoren 16, 17, 19 ermittelten Hindernis ausgegeben.

Kritische Situationen für das Fahrzeug können z.B. akute Fahrzeugdefekte, so z.B. ein Defekt im Bremssystem, ein geringer Abstand des Fahrzeugs zu einem Hindernis, eine Überschreitung einer Fahrbahnbegrenzungsmarkierung oder ein zu geringer Abstand zu einem vorausfahrenden oder zu einem nebenher fahrenden Fahrzeug sein. Eine Ermittlung erfolgt jeweils durch geeignete Sensoren.

In der Figur 2 ist eine Schaltung von Fahrzeugsensoren zu der Recheneinheit 23 dargestellt. In der Recheneinheit 23 ist eine Speichereinheit 31 zum Abspeichern von Grenzwerten angeordnet, mit denen die von den Fahrzeugsensoren ermittelten Werte verglichen werden. Mittels Vergleich zu den in der Speichereinheit 31 abgelegten Grenzwerten wird von der Recheneinheit 23 entschieden, ob der Fahrer aufmerksam ist oder nicht. Legt die Recheneinheit 23 fest, dass eine Warnung ausgegeben wird, so wird der Befehl zur Ausgabe einer Warnung an eine Ausgabeeinheit 32 weitergeleitet. Mittels der Ausgabeeinheit 32 wird eine Warnung an eine Anzeigeeinheit 33 weitergeleitet, in der die Warnung zur Anzeige gelangt. Die Anzeigeeinheit 33 ist vorzugsweise in einer für den Fahrer gut sichtbaren Stelle ausgeführt, z.B. in der Form der Anzeige 25 gemäß der Figur 1. In einem bevorzugten Ausführungsbeispiel wird durch eine Sprachbildungseinheit 34 die Warnung in eine Sprachausgabe umgewandelt, die ebenso wie ein Warnton über einen Lautsprecher 24 ausgegeben wird. Mit der Recheneinheit 23 ist die Kameravorrichtung 5, die Radarvorrichtung 8, die Kameravorrichtung 9, eine erste Außenspiegelkamera 13, eine zweite Außenspiegelkamera 15, die Abstandssensoren 16, 17, 19, die physiologischen Sensoren 21, die elektrischen Geräte 22 und in der Figur 1 nicht dargestellte Fahrzeugsensoren, z.B. eine Kühlmittelkontrolle 35 und eine Bremssystemkontrolle 36 verbunden.

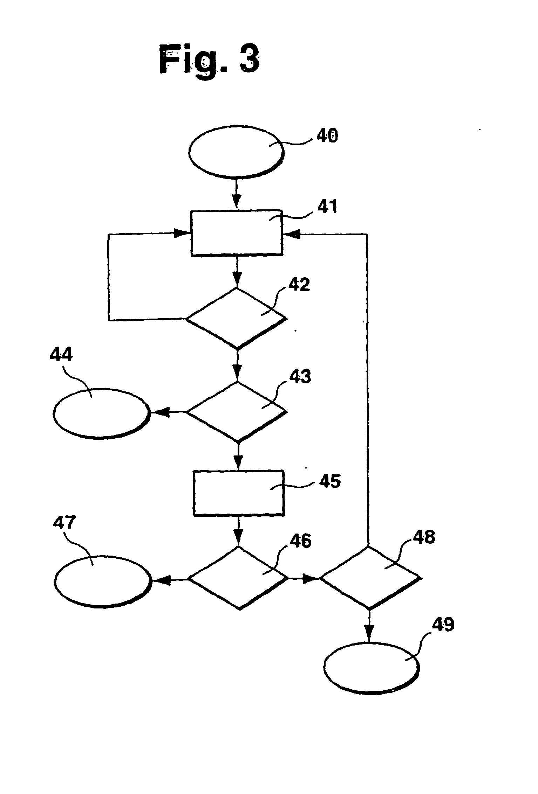

In der Figur 3 ist ein erstes Ausführungsbeispiel für einen erfindungsgemäßen Verfahrensablauf dargestellt. Ausgehend von einem Initialisierungsschritt 40, in dem das erfindungsgemäße Verfahren gestartet wird, z.B. bei einem Start des Personenkraftfahrzeugs 1, wird zu einem Ermittlungsschritt 41 weiter verzweigt. In dem Ermittlungsschritt 41 werden die Radarvorrichtung 8, die Kameravorrichtung 9, die Außenspiegelkameras 13, 15 und die Abstandssensoren 16, 17, 19 dahingehend abgefragt, ob eine kritische Situation vorliegt. Dies wird in einem anschließenden ersten Prüfschritt 42 überprüft. Liegt keine kritische Situation vor, so wird zu dem Ermittlungsschritt 41 zurückverzweigt. Wird dagegen festgestellt, dass eine kritische Situation vorliegt, wird zu einem zweiten Prüfschritt 43 weiterverzweigt. In dem zweiten Prüfschritt 43 wird überprüft, ob die dem Ermittlungsschritt 41 ermittelte, kritische Situation eine hohe Priorität aufweist. Dies ist z.B. der Fall, wenn der Abstand der Abstandssensoren 16, 17, 19 geringer als 50 cm ist, wenn das Bremssystem ausgefallen ist, wenn die Kühlwassertemperatur überschritten wird oder wenn der Abstand zu einem vorrausfahrenden Fahrzeug weit unterhalb des halben Tachoabstandes liegt. Wird eine solche kritische Situation festgestellt, liegt eine Warnung hoher Priorität vor. Es wird daher zu einem Ausgabeschritt 44 weiterverzeigt, in dem die Warnung hoher Priorität über die Ausgabeeinheit 32 mittels der Lautsprecher 24 und der Anzeigeeinheit 33 ausgegeben wird. Wird dagegen in dem zweiten Prüfschritt 43 festgestellt, dass keine solche Warnung hoher Priorität vorliegt, wird zu dem Aufmerksamkeitsermittlungsschritt 45 weiterverzweigt, in dem die Aufmerksamkeit des Fahrers über den für die in dem Ermittlungsschritt 41 ermittelte kritische Situation relevanten Bereich bestimmt wird. In dem anschließenden, dritten Prüfschritt 46, wird überprüft, ob die ermittelte Aufmerksamkeit niedrig oder hoch ist. Ist die ermittelte Aufmerksamkeit niedrig, so wird zu einem Ausgabeschritt 47 weiterverzweigt, in dem eine Warnung in gleicher Weise wie bei dem Ausgabeschritt 44 ausgegeben wird. Wird dagegen in dem dritten Prüfschritt 46 festgestellt, dass die Aufmerksamkeit des Fahrers für den entsprechenden Bereich hoch ist, so wird zu einem vierten Prüfschritt 48 weiterverzweigt. In dem vierten Prüfschritt 48 wird überprüft, ob für die gleiche, ermittelte, kritische Situation der vierte Prüfschritt 48 bereits mehrfach erreicht wurde. Dies ist z.B. dann der Fall, wenn ein Fahrer längerfristig die Fahrbahnbegrenzung mit dem Fahrzeug überschreitet. In diesem Fall wird zu einem Ausgabeschritt 49 weiterverzweigt, in dem eine Warnung ebenso wie in dem Ausgabeschritt 44 ausgegeben wird. Ergibt dagegen der vierte Prüfschritt 48, dass eine in dem Ermittlungsschritt 41 ermittelte, kritische Situation das erste Mal erreicht wird, so wird zu dem Ermittlungsschritt 41 weiterverzweigt und im weiteren Verlauf wird überprüft, ob die kritische Situation weiterhin besteht. Um ein wiederholtes Auftreten einer kritischen Situation ermitteln zu können, wird in dem vierten Prüfschritt 48 für kritische Situationen ein in der Figur 3 nicht dargestellter Zähler inkrementiert, der nach einer vorgegebenen Zeit zurückgesetzt wird, wenn die kritische Situation nicht erneut aufgetreten ist bzw. nicht mehr besteht.

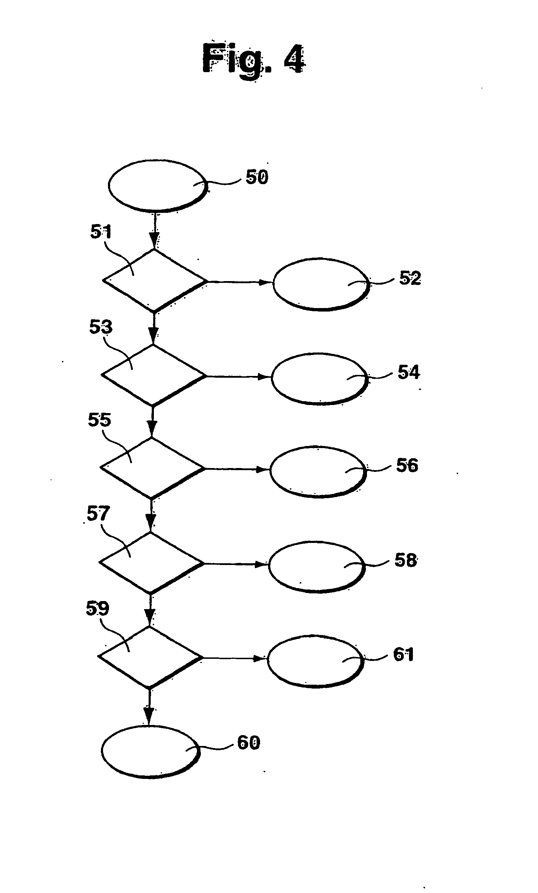

In der Figur 4 ist der Aufmerksamkeitsermittlungsschritt 45 aus der Figur 3 im Detail dargestellt. Ausgehend von einem Initialisierungsschritt 50 wird in einem ersten Prüfschritt 51 geprüft, ob die physiologischen Sensoren 21 einen Hinweis darauf geben, dass der Fahrer ermüdet ist. Wird eine Ermüdung festgestellt, z.B. anhand einer niedrigen Körpertemperatur oder eines niedrigen Pulsschlages, wird zu einem ersten Festlegungsschritt 52 weiterverzweigt, dem die Aufmerksamkeit des Fahrers als niedrig festgelegt wird. In einer bevorzugten Ausführung sind hierbei der Speichereinheit 31 spezielle physiologische Kenndaten des Fahrers nicht flüchtig ablegbar. Wird dagegen festgestellt, dass die physiologischen Daten in einem Nennwertbereich liegen und keinen Rückschluss auf eine Müdigkeit des Fahrers geben, so wird zu einem zweiten Prüfschritt 53 weiterverzweigt. In dem zweiten Prüfschritt 53 wird anhand einer Auswertung des von der Kameravorrichtung 5 ermittelten Bilds des Fahrers festgestellt, ob der Fahrer ermüdet ist. Dies erfolgt vorzugsweise über die Auswertung der Lidschlagsfrequenz bzw. über eine Auswertung, ob die Augen des Fahrers geschlossen sind. Wird dies festgestellt, so wird zu einem zweiten Festlegungsschritt 54 verzweigt, in dem ebenfalls festgelegt wird, dass die Aufmerksamkeit des Fahrers niedrig ist. Andernfalls wird zu einem dritten Prüfschritt 55 weiterverzweigt, in dem überprüft wird, ob das Mobiltelefon aktiviert ist. Ist dies der Fall, so wird ebenfalls eine niedrige Aufmerksamkeit des Fahrers in einem dritten Festlegungsschritt 56 festgelegt. Wird dagegen festgestellt, dass das Mobiltelefon nicht benutzt wird, so wird zu einem vierten Prüfschritt 57 weiterverzweigt, in dem überprüft wird, ob eine erhöhte Bedienungshäufigkeit der übrigen elektrischen Geräte 22, so z.B. der Navigationsvorrichtung oder der Autoradiovorrichtung, in einem vorgegebenen Zeitintervall erfolgt ist. Wird festgestellt, dass eine solche erhöhte Bedienfrequenz erfolgt ist, so wird ebenfalls zu einem vierten Feststellungsschritt 58 weiterverzweigt in dem eine niedrige Aufmerksamkeit des Fahrers ermittelt wird. Wird keine erhöhte Bedienfrequenz festgestellt, so wird zu einem fünften Prüfschritt 59 weiterverzweigt, in dem überprüft wird, ob die Blickrichtung des Fahrers mit der Richtung übereinstimmt, die für die im Ermittlungsschritt 41 ermittelte kritische Situation wichtig ist. Ist die kritische Situation z.B. ein verringerter Abstand des Fahrzeugs zu einem hinter ihm befindlichen Hindernis, so wird in dem Fall, dass der Fahrer auch nach hinten schaut, eine hohe Aufmerksamkeit des Fahrers in einem an den fünften Prüfschritt 59 anschließenden fünften Festlegungsschritt 60 ermittelt. Wird dagegen festgestellt, dass die Blickrichtung, die für die kritische Situation wichtig ist, mit der Blickrichtung des Fahrers nicht übereinstimmt, so wird zu einem sechsten Festlegungsschritt 61 weiterverzweigt, in dem eine niedrige Aufmerksamkeit des Fahrers ermittelt wird.

Gehen in der Ausgabeeinheit 32 mehrere Warnungen zur Ausgabe ein, so erfolgt in einem bevorzugten Ausführungsbeispiel eine Ausgabe derjenigen Warnung zuerst, die für eine Richtung relevant ist, in die der Fahrer nicht schaut gegenüber einer Warnung für eine Richtung, in die der Fahrer gerade seinen Blick gerichtet hat. Hierdurch wird gewährleistet, dass Warnungen für kritische Situationen zuerst ausgegeben werden, die sich nicht in einem Blickfeld des Fahrers befinden.

## Patentansprüche

1. Verfahren zur Warnung eines Fahrers eines Fahrzeugs,
- wobei von Fahrzeugsensoren eine kritische Situation erfaßt wird,
- wobei eine Aufmerksamkeit des Fahrers ermittelt wird,
- wobei durch eine Kameravorrichtung ein Bild des Fahrers erfasst wird und das Bild von einer Recheneinheit verarbeitet wird,
- wobei aus dem Bild eine Aufmerksamkeit des Fahrers ermittelt wird,
- wobei durch die Recheneinheit eine Blickrichtung des Fahrers ermittelt wird, und
- wobei eine Warnung vor einer kritischen Situation derart in Abhängigkeit von der Aufmerksamkeit des Fahrers auf diese kritische Situation ausgegeben wird, daß bei einer ermittelten hohen Aufmerksamkeit des Fahrers auf die Ausgabe der Warnung verzichtet wird,
**dadurch gekennzeichnet,**
- **daß** bei mehreren gleichzeitig auszugebenden Warnungen eine erste Warnung vor einer kritischen Situation, die in der Blickrichtung des Fahrers liegt, erst nach einer zweiten Warnung vor einer kritischen Situation, die außerhalb der Blickrichtung des Fahrers liegt, ausgegeben wird.

2. Verfahren nach Anspruch 1, **dadurch gekennzeichnet, dass** die Aufmerksamkeit des Fahrers anhand der Blickrichtung, der Lidschlagsfrequenz und/oder der Kopfposition ermittelt wird.

3. Verfahren nach einem der vorhergehenden Ansprüche, **dadurch gekennzeichnet, dass** eine Bedienung und/oder Benutzung von in dem Fahrzeug angeordneten Geräten durch den Fahrer erfasst wird und dass eine niedrige Aufmerksamkeit des Fahrers ermittelt wird, wenn eines der Geräte benutzt wird und/oder wenn ein vorgegebener Wert einer Bedienfrequenz eines der Geräte überschritten wird.

4. Verfahren nach einem der vorhergehenden Ansprüche, dass über Sensoren ein Müdigkeitszustand des Fahrers ermittelt wird, vorzugsweise über eine Messung der Körpertemperatur und/oder der Pulsfrequenz, und dass eine Aufmerksamkeit des Fahrers anhand des Müdigkeitszustands ermittelt wird.

5. Verfahren nach einem der vorhergehenden Ansprüche, **dadurch gekennzeichnet, dass** einer Warnung eine Priorität zugewiesen wird und dass Warnungen hoher Priorität unabhängig von der Aufmerksamkeit des Fahrers ausgegeben werden.

6. Verfahren nach einem der vorhergehenden Ansprüche, **dadurch gekennzeichnet, dass** die Warnung zumindest akustisch ausgegeben wird.

7. Verfahren nach einem der vorherigen Ansprüche, **dadurch gekennzeichnet, dass** als Fahrzeugsensoren zur Erfassung einer kritischen Situation für das Fahrzeug eine Einparkhilfevorrichtung, eine Vorrichtung zur Abstandshaltung, eine Vorrichtung zur Erkennung von Hindernissen in einem toten Blickwinkel und/oder eine Überwachungsvorrichtung der Fahrbahnbegrenzung verwendet werden.

## Claims

1. Method for warning a driver of a vehicle,
- a critical situation being sensed by vehicle sensors
- the attentiveness of the driver being determined,
- a camera device sending an image of the driver and the image being processed by a computing unit
- the attentiveness of the driver being determined from the image,
- the computing unit determining the viewing direction of the driver, and
- a warning about a critical situation being issued as a function of the attentiveness of the driver to this critical situation, in such a way that when a high level of attentiveness of the driver is determined, the issuing of the warning is dispensed with,
**characterized**
- **in that** when a plurality of warnings are output simultaneously a first warning about a critical situation is not output until after a second warning about a critical situation which is located outside the viewing direction of the driver.

2. Method according to Claim 1, **characterized in that** the attentiveness of the driver is determined by means of the viewing direction, the frequency of blinking and/or the position of the head.

3. Method according to one of the preceding claims, **characterized in that** the driver operating and/or using devices arranged in the vehicle is sensed, and **in that** a low level of attentiveness of the driver is determined if one of the devices is used and/or if a predefined value of an operating frequency of one of the devices is exceeded.

4. Method according to one of the preceding claims, **characterized in that** a tired state of the driver is determined by means of sensors, preferably by measuring the body temperature and/or the pulse frequency, and **in that** the attentiveness of the driver is determined by reference to the tired state.

5. Method according to one of the preceding claims, **characterized in that** a priority is assigned to a warning, and **in that** warnings with a high priority are issued independently of the attentiveness of the driver.

6. Method according to one of the preceding claims, **characterized in that** the warning is issued at least audibly.

7. Method according to one of the preceding claims, **characterized in that** a parking aid device, a device for maintaining inter-vehicle distance, a device for detecting obstacles in a blind angle and/or a device for monitoring the boundaries of the carriageway are used as vehicle sensors for sensing a critical situation for the vehicle.

## Revendications

1. Procédé pour avertir un conducteur d'un véhicule, selon lequel
- des capteurs de véhicule détectent une situation critique,
- un état d'attention du conducteur est déterminé,
- un dispositif de caméras saisit une image du conducteur et l'image est traitée par l'unité de calcul,
- une attention du conducteur est déterminée à partir de l'image,
- l'unité de calcul détermine une direction du regard du conducteur, et
- avant une situation critique un avertissement concernant cette situation critique est émis en fonction de l'attention du conducteur de telle manière que lorsqu'on détermine une attention du conducteur élevée, on renonce à émettre l'avertissement,
**caractérisé en ce que**
en cas de plusieurs avertissements à émettre en même temps, un premier avertissement d'une situation critique située dans la direction visuelle du conducteur n'est émis qu'après un second avertissement d'une situation critique située hors de la direction visuelle du conducteur.

2. Procédé selon la revendication 1,
**caractérisé en ce que**
l'attention du conducteur est déterminante grâce à la direction du regard, à la fréquence à laquelle battent les paupières et/ou à la position de la tête.

3. Procédé selon l'une des revendications précédentes,
**caractérisé en ce qu'**
on détecte que le conducteur commande et/ou se sert d'appareils placés dans le véhicule et on établit que le conducteur a une attention faible si l'un des appareils est utilisé et/ ou si une valeur prédéfinie est dépassée pour une fréquence de commande sur un des appareils.

4. Procédé selon l'une des revendications précédentes,
**caractérisé en ce qu'**
un état de fatigue du conducteur est déterminé au moyen de capteurs, de préférence en mesurant la température du corps et/ou la fréquence de pulsation, et une attention du conducteur est déterminée à l'aide de l'état de fatigue.

5. Procédé selon l'une des revendications précédentes,
**caractérisé en ce qu'**
une priorité est attribuée à un avertissement et des avertissements de priorité élevée sont émis indépendamment de l'attention du conducteur.

6. Procédé selon l'une des revendications précédentes,
**caractérisé en ce que**
l'avertissement est émis au moins acoustiquement.

7. Procédé selon l'une des revendications précédentes,
**caractérisé en ce que**
les capteurs de véhicule qui servent à détecter une situation critique pour le véhicule sont un dispositif d'aide au parquage, un dispositif de maintien à distance, un dispositif d'identification d'obstacles dans un angle mort de vision et/ou un dispositif de surveillance de limites de voies de circulation.
